# EUROPÄISCHE PATENTSCHRIFT

(11) **EP 2 694 804 B1**
(45) Veröffentlichungstag und Bekanntmachung des Hinweises auf die Patenterteilung: **18.10.2017**
(21) Anmeldenummer: 12709559.4
(22) Anmeldetag: 09.03.2012
(51) Int. Cl.: F03D 80/50, F03D 80/70

(54) **VERFAHREN UND VORRICHTUNG FÜR SCHNELL-ÖLWECHSEL AN ANTRIEBSEINRICHTUNGEN VON WINDENERGIEANLAGEN**
METHOD AND DEVICE FOR QUICK OIL CHANGE OF DRIVES IN WIND TURBINES
PROCEDE ET DISPOSITIF DE CHANGEMENT RAPIDE D'HUILE POUR MÉCANISMES DE COMMANDE DES ÉOLIENNES

(30) Priorität: 01.04.2011 DE 102011015858
(43) Veröffentlichungstag der Anmeldung: 12.02.2014
(73) Patentinhaber: Senvion GmbH, 22297 Hamburg (DE)
(72) Erfinder: SCHNETGÖKE, Hanno, 24105 Kiel (DE); TUBBESING, André, 24783 Osterrönfeld (DE)
(74) Vertreter: Glawe, Delfs, Moll
(86) Internationale Anmeldenummer: PCT/EP2012/054158
(87) Internationale Veröffentlichungsnummer: WO 2012/130592

(56) Entgegenhaltungen:
- EP-A2- 1 296 084
- EP-A2- 1 596 064
- WO-A1-03/031812
- FR-A- 714 621
- US-A- 5 454 960

## Beschreibung

Die Erfindung betrifft Ölwechsel an Antriebseinrichtungen von Windenergieanlagen, insbesondere Motoren und Getrieben für Pitchverstelleinrichtungen, siehe z.B. EP 1 296 084 A2. Moderne Windenergieanlagen weisen üblicherweise einen Windrotor auf, dessen Rotorblätter hinsichtlich ihres Anstellwinkels veränderlich sind (sog. Pitchverstellung). Dazu sind Antriebseinrichtungen am Windrotor vorgesehen. In der Regel sind sie in der Rotornabe angeordnet, wobei aus Leistungs- und Redundanzgründen jedem Rotorblatt eine eigene Antriebseinrichtung zugeordnet ist.

Generell benötigen Antriebseinrichtungen, wie Getriebe und Motoren, eine Schmierung, um vorzeitigen Verschleißerscheinungen vorzubeugen. Die Schmierung erfolgt i. d. R. mit Öl. Durch Abrieb wird das Öl verunreinigt und muss im Zuge einer Wartung regelmäßig gewechselt werden. So müssen Ölwechsel auch bei Windenergieanlagen regelmäßig durchgeführt werden. Dies erfordert die Anwesenheit eines Monteurs im Maschinenhaus der Windenergieanlage, was insbesondere bei einer Vielzahl von Windenergieanlagen in einem Windpark und/oder bei weit außerhalb aufgestellten Windenergieanlagen, beispielsweise bei Offshore-Windenergieanlagen, erheblichen Aufwand erfordert.

Eine manuelle Methode zum Durchführen eines Ölwechsels bei Antriebseinrichtungen von Windenergieanlagen ist in der Offenlegungsschrift DE 10 2008 027 365 A1 beschrieben. Demnach wird in einem ersten Schritt der Windrotor in eine bestimmte Position (Wartungsposition) gedreht, so dass sich ein Ölsumpf der Antriebseinrichtung mit seiner Auslassöffnung (relativ zur Antriebseinrichtung) unten befindet. Das Öl in der Antriebseinrichtung steht dann über der Auslassöffnung. Durch Öffnen der Auslassöffnung wird das Öl abgelassen und in einem Altöl-Behälter aufgefangen. Zur Befüllung mit Frischöl wird der Windrotor um 180 Grad gedreht, so dass sich die Auslassöffnung der nun entleerten Antriebseinrichtung oben befindet. Das Frischöl wird eingegossen und die Auslassöffnung wieder verschlossen. Dieser Vorgang wird für jede einzelne der anderen Antriebseinrichtungen wiederholt. Da die Antriebseinrichtungen derartiger Windenergieanlagen üblicherweise verschieden orientiert in der Rotornabe angeordnet sind (nämlich so, dass sie jeweils dieselbe relative Lage zu dem von ihr betätigten Rotorblatt aufweist), muss der Windrotor jedes Mal weitergedreht werden, um die jeweiligen Positionen zum Entleeren und Befüllen zu erreichen. Bei einer Windenergieanlage mit einem dreiblättrigen Windrotor müssen demnach ausgehend von der Wartungsposition mindestens fünf Drehungen des Windrotors für einen Ölwechsel der Antriebseinrichtungen durchgeführt werden. Nachteil dieser Methode ist der hohe Aufwand durch das wiederholte Drehen des Windrotors, der zum einen viel Zeit und zum anderen viel Personal benötigt.

Aus einem anderen Bereich der Technik, nämlich der Automobilindustrie, ist es bekannt, das Öl mit Hilfe einer Pumpvorrichtung durch eine einzige Öffnung schnell zu entfernen und wieder aufzufüllen. Diese Vorrichtung ist allerdings recht groß und schwer und deswegen nicht zum tragbaren Einsatz geeignet. Zur Anwendung bei der Wartung von Windenergieanlagen ist sie daher ungeeignet.

Der Erfindung liegt die Aufgabe zugrunde, den zeitlichen und personellen Aufwand des Ölwechsels bei Windenergieanlagen zu verringern und letztendlich die Kosten eines Ölwechsels bzw. der Wartung von Windenergieanlagen zu senken.

Die erfindungsgemäße Lösung liegt in den Merkmalen der unabhängigen Ansprüche. Vorteilhafte Weiterbildungen sind Gegenstand der abhängigen Ansprüche.

Die Erfindung schlägt ein Verfahren und eine Anordnung vor, mit der das Verfahren durchgeführt werden kann, die den Ölwechsel an Windenergieanlagen beschleunigen und auch den personellen Aufwand verringern, mit den Merkmalen der unabhängigen Ansprüche. Die Erfindung erstreckt sich ferner auf entsprechend ausgebildete Antriebseinrichtungen und ein Ölwechselgerät.

Bei einem Verfahren zum Durchführen eines Ölwechsels an einer Windenergieanlage, die einen Turm mit einem darauf befindlichen Maschinengehäuse aufweist, an dem ein Rotor mit mehreren Rotorblättern drehbar angebracht ist und der Rotor mehrere, mit unterschiedlicher Orientierung angeordnete Antriebseinrichtungen aufweist, umfassend ein Drehen des Windrotors in eine Wartungsposition, anschließendes Ablassen des Öls aus einer ersten Antriebseinrichtung, Befüllen der ersten Antriebseinrichtung mit Frischöl, Ablassen des Öls aus einer zweiten, anders als die erste orientierte Antriebseinrichtung, und Befüllen der zweiten Antriebseinrichtung mit Frischöl, wobei erfindungsgemäß vorgesehen ist, dass eine erste verschließbare Auslassöffnung an einem Sumpf der ersten Antriebseinrichtung in der Wartungsposition des Rotors in einen geodätischen Tiefpunkt gedreht ist, und die Antriebseinrichtungen jeweils an einem dem Sumpf gegenüberliegenden Ende ihres Gehäuses einen Spiegelsumpf mit einer zweiten verschließbaren Auslassöffnung aufweisen, wobei das Ablassen des Öls aus der zweiten Antriebseinrichtung durch die zweite verschließbare Auslassöffnung erfolgt, so dass der Rotor während und zwischen des Ablassens des Öls aus erster und zweiter Antriebseinrichtung seine Drehposition beibehalten kann.

Nachfolgend seien einige verwendete Begriffe erläutert.

Unter einer Wartungsposition wird diejenige Drehposition des Windrotors verstanden, in der ein Ölwechsel stattfinden soll. So kann beispielsweise als Wartungsposition für einen dreiblättrigen Rotor die sog. Y-Position definiert sein, in der eines der Rotorblätter vertikal nach unten orientiert ist. Bei entsprechend positionierten Auslassöffnungen kann auch jede andere Rotorposition als Wartungsposition genutzt werden.

Unter der Orientierung der Antriebseinrichtung wird ihre Einbaulage am Rotor verstanden. Sie ist für die einzelnen Antriebseinrichtungen unterschiedlich, das heißt sie sind nicht parallel zueinander ausgerichtet. In der Regel wird es so sein, dass die Antriebseinrichtungen relativ zueinander um einen Winkel versetzt ausgerichtet sind, der sich aus 360 Grad geteilt durch die Anzahl der Rotorblätter ergibt. Damit können sich die Antriebseinrichtungen jeweils in identischer relativer Lage zu dem jeweils zugeordneten Rotorblatt befinden.

Unter einem Sumpf wird eine wannenartige Gestaltung verstanden, die geodätisch unterhalb eines eine Flüssigkeit enthaltenden Hohlraums so angeordnet ist, dass sich darin die Flüssigkeit aus dem Hohlraum sammelt. Dies kann beispielsweise der Sumpf in einem Getriebegehäuse sein. Die Flüssigkeit kann über eine im geodätischen Tiefpunkt angeordnete Auslassöffnung abgelassen werden. Unter einem Spiegelsumpf wird eine funktionsgleiche Struktur am gegenüberliegenden Ende des Hohlraums des Gehäuses verstanden. Ist das Gehäuse so orientiert, dass der Spiegelsumpf unten ist, befindet sich dementsprechend die zweite Auslassöffnung im geodätischen Tiefpunkt.

Erfindungsgemäß braucht der Rotor zum Ölwechsel lediglich einmal zu Anfang in die Wartungsposition gedreht zu werden. Der Rotor braucht im Zuge des Ölwechsels an den einzelnen Antriebseinrichtungen dank der Erfindung nicht weitergedreht zu werden, im Gegensatz zum bekannten Stand der Technik. Dadurch wird der zeitliche Aufwand des Ölwechsels deutlich verringert. Insbesondere wird so nicht nur zeitraubendes Verdrehen des Rotors eingespart, was wegen des dazu erforderlichen Entfernens und Wiedereinsetzens von Sicherungseinrichtungen, vor allem gegen unbeabsichtigtes Verdrehen des Windrotors, zeit- und personalintensiv ist. Mit der Erfindung ist es so ermöglicht, den Ölwechsel mit Hilfe von nur einem Ölwechselgerät an mehreren Antriebseinrichtungen gleichzeitig oder nacheinander durchzuführen, ohne dass die Stellung des Rotors verändert wird. Ein weiterer Vorteil der Erfindung ist, dass der Vorgang von einer einzelnen Person durchgeführt werden kann, so dass durch die Erfindung auch der personelle Aufwand deutlich reduziert wird.

Vorzugsweise kann das Ablassen des Öls durch Abpumpen unterstützt werden. Das Entleeren der Antriebseinrichtung erfolgt schneller, so dass weniger Zeit benötigt wird. Überdies kann so ein sicheres und vollständigeres Entleeren erreicht werden. Dementsprechend kann zusätzlich oder alternativ das Befüllen der Antriebseinrichtung mit Frischöl durch Pumpen und/oder die Nutzung von Druckluft, die in die Antriebseinrichtung eingeführt wird, unterstützt werden. Das Befüllen kann damit nicht nur schneller, sondern auch zuverlässiger erfolgen.

Besonders bevorzugt ist es, wenn die abgelassenen und/oder eingefüllten Ölvolumina automatisch gesteuert werden. Das bedeutet, dass nach Ablassen von bzw. Befüllen mit einer voreinstellbaren Ölmenge der Vorgang des Ablassens bzw. des Befüllens selbsttätig beendet wird. Durch diese Automatisierung wird der für den Ölwechsel notwendige Aufwand verringert. Außerdem erhöht sich die Zuverlässigkeit, mit der der Ölwechsel durchgeführt wird. Der automatisierte Ablauf könnte derart gesteuert werden, dass jeweils nur der Ablass- und Befüllvorgang automatisiert abläuft und nach dem Ablassvorgang der Befüllvorgang separat gestartet werden muss oder dass der Befüllvorgang automatisch nach Beendigung des Ablassvorganges gestartet wird.

Um den für den Ölwechsel erforderlichen Aufwand weiter zu verringern, wird mit Vorteil eine bidirektionale Leitung sowohl zum Entleeren wie auch zum Befüllen mit Frischöl verwendet. Der zum Verlegen und Anschließen von Leitungen an die Antriebseinrichtungen erforderliche Aufwand verringert sich dadurch. Dieser Effekt ist umso größer, je mehr Antriebseinrichtungen in der Windenergieanlage vorhanden sind.

Die Erfindung erstreckt sich weiter auf eine Antriebseinrichtung zur Durchführung des erfindungsgemäßen Verfahrens. Dazu ist bei der Antriebseinrichtung mit einem einen Ölraum umschließenden Gehäuse, das an einem in einer ersten Lage unteren Ende des Gehäuses einen Sumpf aufweist, der im geodätischen Tiefpunkt eine Auslassöffnung zur Aufnahme eines Auslassventils aufweist, gemäß der Erfindung vorgesehen, dass an einem dem Sumpf gegenüberliegenden Ende des Gehäuses ein Spiegelsumpf ausgebildet ist, der eine zweite Auslassöffnung zur Aufnahme eines zweiten Ablassventils aufweist und der Spiegelsumpf derart ausgebildet ist, dass in einer zweiten von der ersten verschiedenen Lage, sich die zweite Auslassöffnung im geodätischen Tiefpunkt befindet. Sowohl im Bereich des Sumpfes als auch im Bereich des Spiegelsumpfes können in der Gehäusewand mehrere Auslassöffnungen vorgesehen sein.

Mit dem Spiegelsumpf ist es ermöglicht, das Öl aus der Antriebseinrichtung auch dann sicher abzulassen, wenn sie sich nicht in ihrer ersten Lage (mit dem regulären Sumpf nach unten), sondern in einer verdrehten bzw. nahezu oder vollständig invertierten zweiten Lage (verkippte Lage) befindet. Damit werden auf verblüffend einfache und zweckmäßige Weise die konstruktiven Voraussetzungen zur erleichterten Durchführung des erfindungsgemäßen Verfahrens geschaffen.

Vorzugsweise ist eine Ölstandsanzeige für den Spiegelsumpf vorgesehen. Hierbei kann es sich beispielsweise um ein Schauglas handeln, dessen Anbringung bzw. Ausführung (mit Markierungsstrichen oder ähnlichem) sich auf den Spiegelsumpf bezieht. Damit kann sowohl beim manuellen wie auch beim bevorzugten automatisierten Betrieb eine Überwachung der Ölmenge in den Antriebseinrichtungen erfolgen, und zwar auch dann, wenn sie nicht in der ersten Lage sind. Besonders bewährt ist es, wenn die Ölstandsanzeige für den Spiegelsumpf baulich kombiniert ist mit einer Ölstandsanzeige für den Sumpf. Es kann so bei verringerter Teilezahl und geringer Komplexität der Ölstand sowohl für den Sumpf wie auch für den Spiegelsumpf überwacht werden. Damit zeigt sie lageunabhängig den Ölstand an. Ein weiterer Vorzug dieser kombinierten Ausführung liegt in einem Schutz vor Fehlablesung, da es nur noch einen (kombinierten) Ölstandsanzeiger gibt, und so keine Gefahr besteht, den falschen, dem anderen Sumpf zugeordneten Ölstandsanzeiger abzulesen. Die Antriebseinrichtungen für die einzelnen Rotorblätter können so unabhängig von ihrer Einbauposition gleich ausgeführt sein. Damit verringert sich die Teilezahl und die Reparatur sowie der Austausch vereinfachen sich.

Mit Vorteil ist in mindestens einer der Auslassöffnungen eine Schnellkupplung als Ablassventil angeordnet. Damit können Leitungsverbindungen, insbesondere zum Abführen des Altöls bzw. Zuführen des Frischöls, schnell und sicher an die Antriebseinrichtungen angebracht werden. Der Ölwechsel wird dadurch erleichtert und die Gefahr von Fehlbedingungen sinkt.

Weiter kann am Sumpf ein Entlüftungsventil und/oder ein Blindstopfen an der Auslassöffnung angeordnet sein. Das Entlüftungsventil ermöglicht es, das Entleeren des Spiegelsumpfes über die zweite Auslassöffnung schneller durchzuführen.

Zwingend ist dies jedoch nicht. Falls die Geschwindigkeit des Ölwechsels keine Rolle spielt, kann auch ein Blindstopfen vorgesehen sein. Es sei angemerkt, dass mit diesen Optionen die Antriebseinrichtungen verschieden voneinander und nicht mehr austauschbar sind gegen eine herkömmliche Antriebseinrichtung mit Ölwechsel nur in der ersten Lage.

Weiter kann am Sumpf und/oder dem Spiegelsumpf eine gesonderte Restmengenschraube vorgesehen sein. Hiermit kann eine vollständigere Entleerung der Antriebseinrichtungen erreicht werden. In der Regel wird die Betätigung der Restmengenschraube zum turnusmäßigen Ölwechsel nicht erforderlich sein, sondern bleibt besonderen Situationen vorbehalten, zum Beispiel Revisionen.

Die Erfindung erstreckt sich weiter auf ein Ölwechselgerät und eine Anordnung zum automatisierten Ölwechsel an Windenergieanlagen mit den beschriebenen Antriebseinrichtungen mittels eines solchen Ölwechselgeräts. Das Ölwechselgerät weist eine Steuerung, eine Frischölver- und Altölentsorgung, und einen Verbindungsschlauch mit einem Kopfstück auf, das zum Anschluss an eine Antriebseinrichtung, insbesondere einem Pitchantrieb oder einem Azimutantrieb, einer Windenergieanlage ausgebildet ist, wobei gemäß der Erfindung vorgesehen ist, dass die Steuerung zur Durchführung des Verfahrens nach einem der vorangehenden Ansprüche ausgebildet ist. Gemäß einer weiteren Ausführungsform, die ggf. unabhängigen Schutz verdient, ist das Ölwechselgerät alternativ oder zusätzlich zur Steuerung ausgebildet zum gleichzeitigen Anschluss an mehrere Antriebseinrichtungen.

Zweckmäßigerweise ist eine gesonderte Spülleitung vorgesehen, die an die zweite Auslassöffnung der Antriebseinrichtung anschließbar ist und von einer Druckquelle beim Ablassen betätigt wird. Mittels einer solchen Spülleitung kann das Entleeren der Antriebseinrichtung beschleunigt werden, ohne dass auf eine Saugfunktion zurückgegriffen werden muss. Weiter gibt die Spülleitung die Möglichkeit, die Antriebseinrichtung mit Öl zu spülen und damit auch größere Mengen an Materialabrieb aus der Antriebseinrichtung zu entfernen. Mit Vorteil ist ein Belüftungsventil für die Spülleitung vorgesehen. Damit kann sie je nach dessen Stellung auch zum Befüllen der Antriebseinrichtung verwendet werden.

Der Verbindungsschlauch kann bei einer bevorzugten Ausführungsform einen Schlauchsatz mit mehreren Kopfstücken umfassen. Die Mehrzahl an Kopfstücken ist vorzugsweise auf die Anzahl der Antriebseinrichtungen abgestimmt (d. h. genauso viele), so dass bei allen Antriebseinrichtungen auf einmal der Ölwechsel ausgeführt werden kann. Dazu kann der Verbindungsschlauch ein Verteilerstück umfassen, das den Verbindungsschlauch zu den mehreren Kopfstücken verzweigt. In einer weiteren Ausführungsform kann das Ölwechselgerät jedoch auch mit mehreren Schlauchanschlüssen versehen sein, wodurch gleichzeitig mehrere Antriebseinrichtungen mit je einem Verbindungsschlauch an das Ölwechselgerät angeschlossen werden können.

Mit Vorteil ist der Verbindungsschlauch bidirektional ausgelegt. Dies ermöglicht es, durch denselben Schlauch zuerst das alte Öl abzulassen und nachfolgend Frischöl einzufüllen. Zweckmäßigerweise weist das Ölwechselgerät eine Altöl-Verbindung zu einem Altöl-Behälter und/oder eine Frischöl-Verbindung zu einem Frischöl-Behälter auf. Das Ölwechselgerät selbst braucht dann keine Tanks für das Altöl bzw. das Frischöl aufzuweisen, sondern kann vorhandene Behälter nutzen. Damit wird es kompakter und handlicher.

Einen weiteren Vorteil bringt die Benutzung von Sicherheits-Ölventilen. Diese Ventile öffnen sich erst, wenn eine kompatible Schlauchkupplung mit ihnen fest verbunden wird. Dadurch wird sichergestellt, dass das Öl nicht vorzeitig aus der Auslassöffnung austritt bzw. eventuell noch in der Antriebseinrichtung befindliches Restöl nach Entfernen des Schlauches austritt. Dies verringert das Risiko von Umweltschäden, was vor allem bei Offshore-Windenergieanlagen relevant ist, da hier die erhöhte Gefahr besteht, dass das Öl nicht rechtzeitig aufgefangen werden kann.

Vorzugsweise ist das Ölwechselgerät in seinen Abmessungen bzw. seinem Gewicht so beschaffen, dass es von einer Person alleine getragen und insbesondere betätigt werden kann.

Weitere Eigenschaften und Vorteile der Erfindung werden anhand eines Ausführungsbeispiels der Erfindung nachfolgend deutlich, das anhand der beigefügten Zeichnung erläutert wird. Es zeigen:
- Fig. 1: eine schematische Darstellung einer Windenergieanlage;
- Fig. 2: eine schematische Darstellung einer Rotornabe mit drei Antriebseinrichtungen;
- Fig. 3: eine schematische Darstellung einer Antriebseinrichtung;
- Fig. 4: einen Schnitt durch zwei Antriebseinrichtungen in verschiedenen Lagen;
- Fig. 5: eine schematische Darstellung der Ölwechsel-Aggregate; und
- Fig. 6: eine Darstellung eines Anschlussventils.

Die Erfindung wird erläutert am Beispiel einer Windenergieanlage mit drei Rotorblättern.

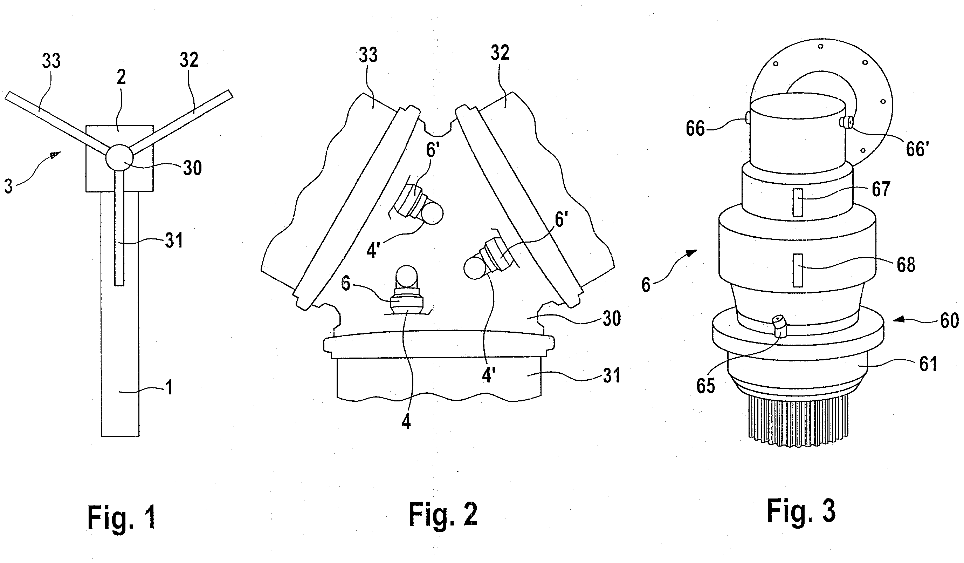

Fig. 1 zeigt den schematischen Aufbau einer Windenergieanlage. Sie weist einen Turm 1 mit einem Maschinenhaus 2 auf. Die Stirnseite des Maschinenhauses 2 weist einen drehbar gelagerten Rotor 3 auf. Der Rotor 3 weist eine Rotornabe 30 auf, an der zwei oder mehrere Rotorblätter 31, 32, 33 verstellbar angeordnet sind. Für dieses Ausführungsbeispiel wird eine Stellung des Rotors 3, bei der eines der Rotorblätter 31 vertikal nach unten orientiert ist, als Wartungsposition definiert, wie in Fig. 1 dargestellt.

In der Rotornabe 30 sind mehrere, im Ausführungsbeispiel drei Antriebseinrichtungen 6, 6' angeordnet, mit denen der Anstellwinkel der Rotorblätter 31, 32, 33 verstellt werden kann. Jede dieser Antriebseinrichtungen 6, 6' ist einem der Rotorblätter 31-33 zugeordnet.

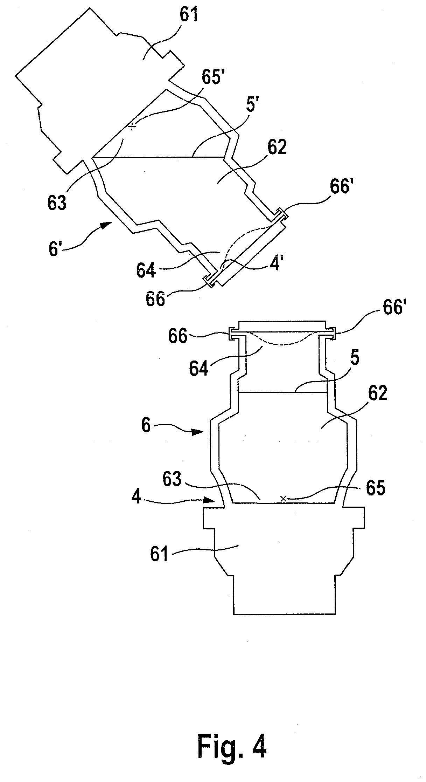

Die Antriebseinrichtungen 6, 6' weisen ein Gehäuse 60 mit einem angeflanschten Triebkopf 61 auf. Das Gehäuse 60 umschließt einen Ölraum 62 für Schmieröl. Er weist an einem Ende einen Sumpf 63 mit einer ersten Auslassöffnung 65 für das Schmieröl auf. Im mittleren Bereich ist ein Schauglas 67 angeordnet, welches eine Markierung für einen Soll-Ölpegel 5 bildet. Am gegenüberliegenden Ende des Ölraums 62 ist ein zweiter Sumpf als Spiegelsumpf 64 ausgebildet. Ihm ist eine zweite Auslassöffnung 66 zugeordnet. Optional kann diametral zu ihr eine zusätzliche zweite Auslassöffnung 66' am Spiegelsumpf 64 vorgesehen sein. Damit ist auch bei ungünstiger Form des Spiegelsumpfs 64 (s. gestrichelte Linie in Fig. 4) ein sicheres Ablassen des Schmieröls gewährleistet. Dem Spiegelsumpf 64 zugeordnet ist ein zweites Schauglas 68, das den jeweiligen Ölpegel der verkippt orientierten Antriebseinrichtungen 6' für die Rotorblätter 32, 33 anzeigt.

Die einzelnen Antriebseinrichtungen 6, 6' sind in identischer relativer Lage zu den Rotorblättern 31-33 angeordnet (s. Fig. 2). Das bedeutet, dass sie bezogen auf eine erdfeste Referenz mit unterschiedlicher Orientierung angeordnet sind. Als Folge befinden sich in der Wartungsposition die geodätischen Tiefpunkte 4, 4' der Antriebseinrichtungen 6, 6' an verschiedenen Positionen der Antriebseinrichtungen 6, 6'. In Fig. 3 ist diejenige Antriebseinrichtung 6 dargestellt, die dem zum Boden weisenden Rotorblatt 31 zugeordnet ist. Sie befindet sich in ihrer ersten Lage, d. h. mit dem regulären Sumpf 63 nach unten wie aus dem Stand der Technik bekannt, wobei ihr geodätischer Tiefpunkt 4 im Bereich des Sumpfs 63 liegt. Je nach Ausführung des Getriebegehäuses 60 und des jeweiligen Sumpfes 63 kann sich die erste Lage auch von der hier gezeigten Lage unterscheiden. Die Antriebseinrichtung 6, 6' kann bspw. um 180° gedreht sein. Bei den beiden anderen Antriebseinrichtungen 6', die den in der Wartungsposition nach oben weisenden Rotorblättern 32, 33 zugeordnet und daher verkippt orientiert sind, befindet sich ihr geodätischer Tiefpunkt 4' jedoch nicht im Bereich des Sumpfs 63, sondern im Bereich des jeweiligen erfindungsgemäßen Spiegelsumpfs 64. Dies ist in Fig. 4 detaillierter dargestellt. Die obere Antriebseinrichtung 6' ist um 120 Grad gedreht zu der unteren Antriebseinrichtung 6, so dass sich ihr geodätischer Tiefpunkt 4' am Spiegelsumpf 64, und zwar genauer gesagt im Bereich der zweiten Auslassöffnung 66 befindet. Man erkennt an der Lage des Ölpegels 5', dass das Schmieröl auch aus der in der Wartungsposition verkippten Antriebseinrichtung 6' abgelassen werden kann, nämlich über die zweite Auslassöffnung 66.

In den ersten und zweiten Auslassöffnungen 65, 66 sind Anschlussventile 7 angeordnet, die als Sicherheitsventile ausgeführt sind. Sie umfassen einen Dichtkörper 70 mit einem Außengewinde 71, das in ein entsprechendes Gegengewinde der Auslassöffnungen 65, 66 eingeschraubt ist. Der Dichtkörper 70 weist eine Durchgangsöffnung 72 auf, in der ein Dichtkolben 73 längsverschieblich aufgenommen ist. Er fungiert als Ventil, das den Durchfluss des Schmieröls durch die Durchgangsöffnung 72 sperrt. Am hinteren Ende der Durchgangsöffnung 72 ist am Dichtkörper 70 eine Schraubaufnahme 74 für einen Verbindungsschlauch 80 vorgesehen, die von einer Schutzkappe 75 abgedeckt werden kann. Der Dichtkolben 73 ragt mit seinem hinteren Ende aus der Schraubaufnahme 74 heraus. Wird der Verbindungsschlauch 80 mit seinem Kopfstück 81 auf die Schraubaufnahme (nach Abnahme der Schutzkappe 75) aufgesetzt, so schiebt das Kopfstück 81 den Dichtkolben 73 nach vorne und öffnet so das Ventil. Das Schmieröl kann durch die Durchgangsöffnung 72 in den Verbindungsschlauch 80 fließen. Die Sicherheitsventile 7 fungieren als Schnellkupplungen.

Die Sicherheitsventile 7 sind an der Antriebseinrichtung 6, welche dem in der Wartungsposition nach unten zeigenden Rotorblatt 31 zugeordnet ist, in der ersten Auslassöffnung 65 und bei den Antriebseinrichtungen 6', die um 120 Grad verkippt angeordnet den in der Wartungsposition nach oben weisenden Rotorblättern 32, 33 zugeordnet sind, in deren zweiten Auslassöffnungen 66, 66' vorgesehen. Zusätzlich können die Sicherheitsventile 7 auch oben am Ölraum 62 vorgesehen sein, also in der zweiten Auslassöffnung 66 der Antriebseinrichtung 6 bzw. der ersten Auslassöffnung 65' der verkippten Antriebseinrichtung 6'. Sie ermöglichen den schnellen Anschluss eines Befüllungsschlauchs, wobei bei gleichzeitig angeschlossenem Verbindungsschlauch 80, wie vorstehend beschrieben, ein schnelles Befüllen bzw. Spülen der Antriebseinrichtungen 6, 6' vorgenommen werden kann. Es können stattdessen auch ein Entlüftungsventil oder ein Blindstopfen vorgesehen sein.

Für den Ölwechsel kann ein Ölwechselgerät 9 genutzt werden. Es weist mindestens einen bidirektionalen Pumpenanschluss 92 auf, der über einen Verbindungsschlauch 80 mit der ersten Auslassöffnung 65 der Antriebseinrichtung 6 und den zweiten Auslassöffnungen 66 der Antriebseinrichtungen 6' verbunden werden kann. Ein Altöl-Auslass 93 des Ölwechselgeräts 9 ist über eine Altöl-Verbindung 95 mit einem Altöl-Behälter 97 verbindbar. Ein Frischöl-Einlass 94 des Ölwechselgeräts 9 ist über eine Frischöl-Verbindung 96 mit einem Frischöl-Behälter 98 verbindbar. Weiter weist es eine Pumpvorrichtung 100 auf. Außerdem ist durch ein Steuerungsaggregat 91 am Ölwechselgerät 9 die ausgepumpte und eingepumpte Menge Öl steuerbar. Das Steuerungsaggregat 91 und die Pumpvorrichtung 100 können entweder in das Ölwechselgerät 9 integriert sein oder als zusätzliche Elemente mit dem Ölwechselgerät 9 verbunden sein. Das Ölwechselgerät 9 ist so beschaffen hinsichtlich Größe und Gewicht, dass es von einer Person getragen werden kann.

Ist das Ölwechselgerät 9 mit mindestens zwei bidirektionalen Pumpenanschlüssen 92 versehen, so können diese genutzt werden um jeweils eine Antriebseinrichtung 6, 6' zu spülen. Sind am Ölwechselgerät doppelt so viele Pumpenanschlüsse 92 wie Antriebsvorrichtungen 6, 6' vorgesehen, können alle Antriebsvorrichtungen gleichzeitig gespült werden. Für den Spülvorgang wird dann ein erster Pumpenanschluss 92 mit einer ersten Auslassöffnung 65 und ein zweiter Pumpenanschluss 92 mit einer zweiten Auslassöffnung 66 verbunden. Bei entsprechender Steuerung des Ölwechselgerätes 9 kann dann Öl aus dem Frischöl-Behälter 98 zur Antriebseinrichtung 6, 6' und von dort zurück zum Altöl-Behälter 97 gefördert und die Antriebsvorrichtung 6, 6' somit gespült werden.

Bei einem weiteren Ausführungsbeispiel der Erfindung ist zusätzlich ein Druckluft-Aggregat 99 vorgesehen, das über einen Druckluft-Auslass 90 und eine Druckluft-Verbindung 84 mit der zweiten Auslassöffnung 66 der Antriebseinrichtung 6 und den ersten Auslassöffnungen 65 der Antriebseinrichtungen 6' verbunden ist, also den Öffnungen, die über dem Soll-Ölpegel 5 angeordnet sind. Das Druckluft-Aggregat 99 kann entweder in das Ölwechselgerät 9 integriert sein oder als zusätzliches Aggregat mit dem Ölwechselgerät verbunden werden.

Im Folgenden wird ein Ölwechsel anhand des Ausführungsbeispiels beschrieben.

Für einen Ölwechsel der Antriebseinrichtungen 6, 6' wird der Rotor 3 in die Wartungsposition verdreht. Dabei ist es unerheblich welches Rotorblatt 31-33 vertikal nach unten orientiert wird; es sei angenommen, dass Rotorblatt 31 weise nach unten, wie in Fig. 1 dargestellt. Im Ausführungsbeispiel ist die diesem Rotorblatt 31 zugeordnete Antriebseinrichtung 6 wie in Fig. 3 gezeigt vertikal nach unten orientiert. Die den beiden anderen Rotorblättern 32, 33 zugeordneten Antriebseinrichtungen 6' sind jeweils bezüglich Fig. 3 um 120° nach rechts bzw. nach links verkippt.

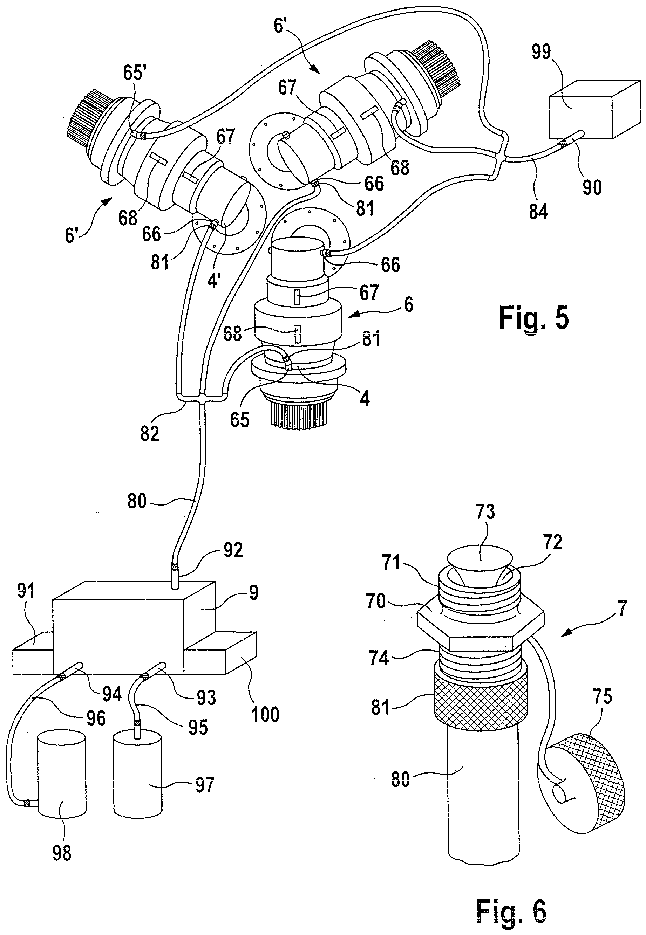

Jede der Antriebseinrichtungen 6, 6' weist im jeweiligen geodätischen Tiefpunkt 4, 4' eine erste bzw. zweite Auslassöffnung 65, 66 auf, wie in Fig. 4 dargestellt. Für die Durchführung der Wartung, wird diese erste bzw. zweite Auslassöffnung 65, 66 über die Schlauchverbindung 80 mit dem Ölwechselgerät 9 verbunden. Dies ist in Fig. 5 dargestellt. Da diese sich alle im jeweiligen geodätischen Tiefpunkt 4, 4' befinden, können sie alle gleichzeitig zum Entleeren mit dem Ölwechselgerät 9 verbunden sein und z. B. über das Anschlussventil 7 geöffnet werden. Zum Ablassen des Öls wird an den mit dem Ölwechselgerät 9 verbundenen Antriebseinrichtungen 6, 6' die andere, oberhalb des Soll-Ölpegels 5 gelegene Auslassöffnung 66, 65' geöffnet. Das Öl wird jetzt gleichzeitig aus den angeschlossenen Antriebseinrichtungen 6, 6' abgelassen und fließt von dem Ölwechselgerät 9 über den Altöl-Auslass 93 in den Altöl-Behälter 97. Nach dem Ablassen des Öls wird über die Pumpvorrichtung 100 des Ölwechselgeräts 9 frisches Öl über den Frischöl-Einlass 94 aus dem Frischöl-Behälter 98 in die angeschlossenen Antriebseinrichtungen 6, 6' gefördert, bis der Ölstand seinen Soll-Ölpegel 5 erreicht hat. Zur Bestimmung des Ölstands innerhalb der Antriebseinrichtungen 6, 6' können die Schaugläser 67, 68 genutzt werden. Zum Schluss werden alle offenen ersten und zweiten Auslassöffnungen 65, 66 der Antriebseinrichtungen 6, 6' verschlossen und das Ölwechselgerät 9 getrennt. Die Windenergieanlage kann dann wieder in Betrieb genommen werden.

Eine Beschleunigung des Ablassens wird durch das Einpumpen von Druckluft in die Antriebseinrichtungen 6, 6' erreicht. Die Druckluft wird über das Druckluft-Aggregat 99 in die zweiten bzw. ersten Auslassöffnungen 66, 65, die über dem Sollöl-Pegel 5 angeordnet sind, eingelassen.

Ebenso kann das Ölwechselgerät 9 durch Absaugen des Öls das Ablassen beschleunigen. Die Druckluft-Verbindung 84 kann auch als Spülleitung fungieren und mit dem Ölwechselgerät 9 verbunden sein.

Die abgelassenen und eingepumpten Ölvolumina sind durch das Steueraggregat 91 automatisch steuerbar. Die Ölvolumina werden dem Steueraggregat 91 durch das Wartungspersonal vorgegeben. Das Steueraggregat 91 schaltet die Pumpvorrichtung 100 des Ölwechselgeräts 9 nach Erreichen der vorgegebenen Ölvolumina automatisch ab. Dies ermöglicht einen unbeaufsichtigten Ölwechsel. Ein unbeaufsichtigter Ölwechsel ist vorteilhaft, da in dieser Zeit das Personal für andere Wartungsarbeiten eingesetzt werden kann.

Ein weiterer Vorteil entsteht in der Nutzung von Sicherheits-Ölventilen 7 an den Auslassöffnungen 65, 66, 66', dem Ölwechselgerät 9 und dem Druckluft-Aggregat 99 in der Kombination mit Schlauchkupplungen, die mit den Sicherheits-Ölventilen 7 kompatibel sind. Dadurch wird zum einen die Gefahr von Umweltschäden durch unbeabsichtigt austretendes Öl verringert und zum anderen werden die Ventile automatisch nach Verbinden mit dem Schlauch geöffnet, was das Verfahren vereinfacht und den Zeitaufwand des Ölwechsels weiter verringert.

Werden alle vorteilhaften Aspekte der Erfindung genutzt, reduziert sich der Personalbedarf erheblich, so dass deutliche Kosteneinsparungen für die regelmäßige Wartung möglich sind. Vor allem an Offshore-Windenergieanlagen zeigt dieses Verfahren deutliche Wirkung, da der Transport und die Unterbringung des Personals nur mit hohem finanziellem Aufwand möglich sind, so dass eine Reduktion des Personalbedarfs sehr vorteilhaft ist.

## Patentansprüche

1. Verfahren zum Durchführen eines Ölwechsels an einer Windenergieanlage, die einen Turm (1) mit einem darauf befindlichen Maschinengehäuse (2) aufweist, an dem ein Rotor (3) mit mehreren Rotorblättern (31, 32, 33) drehbar angebracht ist und der Rotor (3) mehrere, mit unterschiedlicher Orientierung angeordnete Antriebseinrichtungen (6, 6') aufweist, insbesondere Blattverstellgetriebe, umfassend ein
- Drehen des Rotors (3) in eine Wartungsposition,
- anschließendes Ablassen des Öls aus einer ersten Antriebseinrichtung (6),
- Befüllen der ersten Antriebseinrichtung (6) mit Frischöl,
- Ablassen des Öls aus einer zweiten, anders als die erste orientierte Antriebseinrichtung (6'), und
- Befüllen der zweiten Antriebseinrichtung (6') mit Frischöl,
**dadurch gekennzeichnet, dass**
eine erste verschließbare Auslassöffnung (65) an einem Sumpf (63) der ersten Antriebseinrichtung (6) in der Wartungsposition des Rotors in einen geodätischen Tiefpunkt (4) gedreht ist, und die Antriebseinrichtungen (6, 6') jeweils an einem dem Sumpf (63) gegenüberliegenden Ende ihres Gehäuses einen dem Sumpf (63) funktionsgleichen Spiegelsumpf (64) mit einer zweiten verschließbaren Auslassöffnung (66) aufweisen,
wobei das Ablassen des Öls aus der zweiten Antriebseinrichtung (6') durch die zweite verschließbare Auslassöffnung (66) erfolgt, so dass der Rotor während und zwischen des Ablassens des Öls aus erster und zweiter Antriebseinrichtung (6, 6') seine Drehposition beibehalten kann.

2. Verfahren nach Anspruch 1, **dadurch gekennzeichnet, dass** das Ablassen des Öls durch Pumpen unterstützt wird.

3. Verfahren nach Anspruch 1, **dadurch gekennzeichnet, dass** das Ablassen des Öls durch das Einlassen von Druckluft in die Antriebseinrichtung (6, 6') unterstützt wird.

4. Verfahren nach einem der Ansprüche 1 bis 3, **dadurch gekennzeichnet, dass** die abgelassenen und eingefüllten Ölvolumina automatisch gesteuert werden und nach einem wählbaren geförderten Ölvolumen der Pumpvorgang beendet wird.

5. Verfahren nach den Ansprüchen 1 bis 4, **dadurch gekennzeichnet, dass** die Verbindung (80) zwischen der ersten Auslassöffnung (65) und einem Ölwechselgerät (9) bidirektional zum Ablassen und Befüllen verwendet wird.

6. Windenergieanlagen-Antriebseinrichtung mit einem einen Ölraum (62) umschließenden Gehäuse (60), das an einem in einer ersten Lage unteren Ende des Gehäuses einen Sumpf (63) aufweist, der im geodätischen Tiefpunkt (4) eine Auslassöffnung (65) zur Aufnahme eines Ablassventils aufweist, **dadurch gekennzeichnet, dass** an einem dem Sumpf (63) gegenüberliegenden Ende des Gehäuses ein dem Sumpf (63) funktionsgleicher Spiegelsumpf (64) ausgebildet ist, der eine zweite Auslassöffnung (66) zur Aufnahme eines zweiten Ablassventils aufweist und der Spiegelsumpf (64) derart ausgebildet ist, dass in einer zweiten von der ersten verschiedenen Lage, sich die zweite Ablassöffnung (66) im geodätischen Tiefpunkt (4') befindet.

7. Windenergieanlagen-Antriebseinrichtung nach Anspruch 6, **dadurch gekennzeichnet, dass** eine Ölstandsanzeige (68) für den Spiegelsumpf (64) vorgesehen ist.

8. Windenergieanlagen-Antriebseinrichtung nach Anspruch 7, **dadurch gekennzeichnet, dass** die Ölstandsanzeige (68) ein Schauglas ist.

9. Windenergieanlagen-Antriebseinrichtung nach Anspruch 7 oder 8, **dadurch gekennzeichnet, dass** die Ölstandsanzeige (68) baulich kombiniert ist mit einer Ölstandsanzeige (67) für den Sumpf (63).

10. Windenergieanlagen-Antriebseinrichtung nach einem der Ansprüche 6 bis 9, **dadurch gekennzeichnet, dass** als Anschlussventil in mindestens einer der Auslassöffnungen (65, 66) eine Schnellkupplung (7) angeordnet ist.

11. Windenergieanlagen-Antriebseinrichtung nach einem der Ansprüche 6 bis 10, **dadurch gekennzeichnet, dass** am Sumpf (63) ein Entlüftungsventil und/oder ein Blindstopfen in der zweiten Auslassöffnung (66) angeordnet ist.

12. Windenergieanlagen-Ölwechselgerät mit einer Steuerung (91), einer Frischöl-Verbindung (96) und Altölverbindung (95), und mindestens einem Verbindungsschlauch (80) mit einem Kopfstück (81), das zum Anschluss an eine Antriebseinrichtung (6, 6'), insbesondere einem Pitchantrieb, einer Windenergieanlage ausgebildet ist, **dadurch gekennzeichnet, dass** die Steuerung (91) zur Durchführung des Verfahrens nach einem der vorangehenden Ansprüche ausgebildet ist.

13. Ölwechselgerät nach Anspruch 12, **dadurch gekennzeichnet, dass** eine Pumpvorrichtung (100) vorgesehen ist, die mit dem Verbindungsschlauch (80) verbunden und von der Steuerung (91) beim Ablassen betätigt ist.

14. Ölwechselgerät nach Anspruch 12 oder 13, **dadurch gekennzeichnet, dass** eine Druckquelle (99) mit einer gesonderten Spülleitung (90) vorgesehen ist, die an die zweite Auslassöffnung (66, 65) der Antriebseinrichtung (6) anschließbar ist und die Druckquelle (99) beim Ablassen betätigt ist.

15. Anordnung zum automatisierten Ölwechsel an Windenergieanlagen umfassend ein Ölwechselgerät (9) mit einer Steuerung (91), eine Frischölverbindung (96) und Altöl-verbindung (95), und mindestens einen Verbindungsschlauch (80) mit einem Kopfstück (81), das zum Anschluss an eine Antriebseinrichtung (6, 6'), insbesondere einem Pitchantrieb oder einem Azimutantrieb, einer Windenergieanlage ausgebildet ist, **dadurch gekennzeichnet, dass** das Ölwechselgerät (9) zum gleichzeitigen Anschluss an mehrere Antriebseinrichtungen und zur Durchführung des Verfahrens nach einem der Ansprüche 1 bis 11 ausgebildet
ist.

16. Anordnung nach Anspruch 15, **dadurch gekennzeichnet, dass** der Verbindungsschlauch (80) einen Schlauchsatz umfasst, bestehend aus mehreren Einzelschläuchen, wobei die Schläuche jeweils mit dem Kopfstück (81) mit einer Antriebsvorrichtung (6, 6') und mit dem anderen Schlauchende mit einem Pumpenanschluss (92) verbunden werden.

17. Anordnung nach Anspruch 15 oder 16, **dadurch gekennzeichnet, dass** der Verbindungsschlauch (80) ein Verteilerstück (82) umfasst, an das mindestens zwei Kopfstücke (81) angeschlossen sind.

## Claims

1. Method for carrying out an oil change on a wind power plant, which has a tower (1) with an engine nacelle (2) located thereupon, to which a rotor (3) with a plurality of rotor blades (31, 32, 33) is rotatably attached, and the rotor (3) has a plurality of drive devices (6, 6'), especially blade adjustment gears, which are arranged with different orientation, comprising
- rotating of the wind-powered rotor (3) into a maintenance position,
- subsequent draining of the oil from a first drive device (6),
- filling of the first drive device (6) with fresh oil,
- draining of the oil from a second drive device (6') which is oriented differently from the first drive device, and
- filling of second drive device (6') with fresh oil,
**characterized in that**
a first closable outlet opening (65) on a sump (63) of the first drive device (6) is rotated into a geodetic low point (4) in the maintenance position of the rotor, and the drive devices (6, 6'), on an end of their housing opposite the sump (63), have in each case a mirrored sump (64), functionally identical to the sump (63), with a second closable outlet opening (66),
wherein the draining of the oil from the second drive device (6') is carried out by means of the second closable outlet opening (66) so that the rotor, during and between the draining of the oil from the first and second drive devices (6, 6'), can maintain its rotated position.

2. Method according to Claim 1, **characterized in that** the draining of the oil is assisted by pumping.

3. Method according to Claim 1, **characterized in that** the draining of the oil is assisted by the admitting of compressed air into the drive device (6, 6').

4. Method according to one of Claims 1 to 3, **characterized in that** the drained and replenished oil volumes are automatically controlled and after a selectable delivered oil volume the pumping process is terminated.

5. Method according to one of Claims 1 to 4, **characterized in that** the connection (80) between the first outlet opening (65) and an oil change device (9) is used bi-directionally for the draining and filling.

6. Wind power-plant drive device with a housing (60) which encloses an oil chamber (62) and which on a lower end of the housing in a first position has a sump (63) which at the geodetic low point (4) has an outlet opening (65) for accommodating a drain valve, **characterized in that** at one end of the housing, opposite the sump (63), a mirrored sump (64), functionally identical to the sump (63), is formed and has a second outlet opening (66) for accommodating a second drain valve and the mirrored sump (64) is designed in such a way that in a second position which is different from the first position the second outlet opening (66) is located at the geodetic low point (4').

7. Wind power-plant drive device according to Claim 6, **characterized in that** an oil level indicator (68) is provided for the mirrored sump (64).

8. Wind power-plant drive device according to Claim 7, **characterized in that** the oil level indicator (68) is a sight glass.

9. Wind power-plant drive device according to Claim 7 or 8, **characterized in that** the oil level indicator (68) is constructionally combined with an oil level indicator (67) for the sump (63).

10. Wind power-plant drive device according to one of Claims 6 to 9, **characterized in that** a quick-release coupling (7) is arranged as a connecting valve in at least one of the outlet openings (65, 66).

11. Wind power-plant drive device according to one of Claims 6 to 10, **characterized in that** a vent valve and/or a dummy plug is arranged on the sump (63) in the second outlet opening (66).

12. Wind power-plant oil change device with a control unit (91), a fresh-oil connection (96) and waste-oil connection (95), and at least one connecting hose (80) with a headpiece (81) which is designed for connecting to a drive device (6, 6'), especially to a pitch drive, of a wind power plant, **characterized in that** the control unit (91) for implementation of the method is designed according to one of the preceding claims.

13. Oil change device according to Claim 12, **characterized in that** provision is made for a pump device (100) which is connected to the connecting hose (80) and operated by the control unit (91) during the draining.

14. Oil change device according to Claim 12 or 13, **characterized in that** provision is made for a pressure source (99) with a separate flushing line (90) which can be connected to the second outlet opening (66, 65) of the drive device (6) and the pressure source (99) is operated during the draining.

15. Arrangement for the automated oil change on wind power plants, comprising an oil change device (9) with a control unit (91), a fresh-oil connection (96) and waste-oil connection (95), and at least one connecting hose (80) with a headpiece (81) which is designed for connecting to a drive device (6, 6'), especially to a pitch drive or to an azimuth drive, of a wind power plant, **characterized in that** the oil change device (9) is designed for the simultaneous connection to a plurality of drive devices and for carrying out the method according to one of Claims 1 to 11.

16. Arrangement according to Claim 15, **characterized in that** the connecting hose (80) comprises a hose set comprising a plurality of individual hoses, wherein the hoses are connected in each case by the headpiece (81) to a first drive device (6, 6') and by the other hose end are connected to a pump connection (92).

17. Arrangement according to Claim 15 or 16, **characterized in that** the connecting hose (80) comprises a distribution piece (82) to which at least two headpieces (81) are connected.

## Revendications

1. Procédé destiné à effectuer un changement d'huile sur une éolienne qui présente une tour (1) sur laquelle est situé un logement de machine (2) sur lequel un rotor (3) avec plusieurs pales de rotor (31, 32, 33) est mis en place de façon rotative, et le rotor (3) présente plusieurs mécanismes de commande (6, 6') disposés avec une orientation différente, en particulier un engrenage de réglage des pales, comprenant
- une rotation du rotor (3) vers une position de maintenance,
- ensuite, une vidange de l'huile à partir d'un premier mécanisme de commande (6),
- le remplissage du premier mécanisme de commande (6) avec de l'huile neuve,
- la vidange de l'huile à partir d'un deuxième mécanisme de commande (6') orienté différemment du premier, et
- le remplissage du deuxième mécanisme de commande (6') avec de l'huile neuve,
**caractérisé en ce**
**qu'**un premier orifice de sortie (65), qui peut être fermé, sur un carter inférieur (63) du premier mécanisme de commande (6) est tourné dans la position de maintenance du rotor vers un point bas géodésique (4), et les mécanismes de commande (6, 6') présentent respectivement, à une extrémité de leur logement opposée au carter inférieur (63), un carter inférieur (64) symétrique fonctionnellement identique au carter inférieur (63), doté d'un deuxième orifice de sortie (66) qui peut être fermé,
la vidange de l'huile à partir du deuxième mécanisme de commande (6') étant effectuée à travers le deuxième orifice de sortie (66) qui peut être fermé de telle sorte que, pendant et entre la vidange de l'huile à partir du premier et du deuxième mécanisme de commande (6, 6'), le rotor peut conserver sa position de rotation.

2. Procédé selon la revendication 1, **caractérisé en ce que** la vidange de l'huile est assistée par des pompes.

3. Procédé selon la revendication 1, **caractérisé en ce que** la vidange de l'huile est assistée par l'introduction d'air comprimé dans les mécanismes de commande (6, 6').

4. Procédé selon l'une des revendications 1 à 3, **caractérisé en ce que** les volumes d'huile vidangés et introduits sont commandés automatiquement, et le processus de pompage est terminé après un volume d'huile transporté qui peut être choisi.

5. Procédé selon les revendications 1 à 4, **caractérisé en ce que** le raccordement (80) entre le premier orifice de sortie (65) et un appareil de changement d'huile (9) est utilisé de façon bidirectionnelle pour la vidange et le remplissage.

6. Mécanisme de commande pour éolienne, avec un logement (60), entourant le compartiment à huile (62), qui, à une extrémité inférieure du logement dans une première position, présente un carter inférieur (63) qui, dans le point bas géodésique (4), présente un orifice de sortie (65) destiné à recevoir une soupape de vidange, **caractérisé en ce que**, à une extrémité du logement opposée au carter inférieur (63), il est constitué un carter inférieur (64) symétrique fonctionnellement identique au carter inférieur (63), qui présente un deuxième orifice de sortie (66) destiné à recevoir une deuxième soupape de vidange, et le carter inférieur (64) symétrique est constitué de telle sorte que, dans une deuxième position différente de la première, le deuxième orifice de sortie (66) se trouve au point bas géodésique (4').

7. Mécanisme de commande pour éolienne selon la revendication 6, **caractérisé en ce qu'**il est prévu un indicateur de niveau d'huile (68) pour le carter inférieur (64) symétrique.

8. Mécanisme de commande pour éolienne selon la revendication 7, **caractérisé en ce que** l'indicateur de niveau d'huile (68) est un verre de regard.

9. Mécanisme de commande pour éolienne selon la revendication 7 ou 8, **caractérisé en ce que** l'indicateur de niveau d'huile (68) est combiné au plan de la construction avec un indicateur de niveau d'huile (67) pour le carter inférieur (63).

10. Mécanisme de commande pour éolienne selon l'une des revendications 6 à 9, **caractérisé en ce qu'**il est disposé un raccord rapide (7) en tant que soupape de raccordement dans au moins un des orifices de sortie (65, 66).

11. Mécanisme de commande pour éolienne selon l'une des revendications 6 à 10, **caractérisé en ce que**, sur le carter inférieur (63), il est disposé une soupape de purge d'air et/ou un bouchon obturateur dans le deuxième orifice de sortie (66).

12. Appareil de changement d'huile pour éolienne, avec une commande (91), un raccord d'huile neuve (96) et un raccord d'huile usagée (95), et au moins un tuyau de raccordement (80) avec une pièce de tête (81) qui est constituée pour le raccordement à un mécanisme de commande (6, 6'), en particulier une commande de pas, d'une éolienne, **caractérisé en ce que** la commande (91) est constituée pour la réalisation du procédé selon l'une des revendications précédentes.

13. Appareil de changement d'huile selon la revendication 12, **caractérisé en ce qu'**il est prévu un dispositif de pompage (100) qui est raccordé au tuyau de raccordement (80) et qui est actionné par la commande (91) lors de la vidange.

14. Appareil de changement d'huile selon la revendication 12 ou 13, **caractérisé en ce qu'**il est prévu une source de pression (99) avec une conduite de rinçage (90) séparée qui peut être raccordée au deuxième orifice de sortie (66, 65) du premier mécanisme de commande (6), et la source de pression (99) est actionnée lors de la vidange.

15. Ensemble destiné au changement d'huile automatisé sur des éoliennes, comprenant un appareil de changement d'huile (9) avec une commande (91), un raccord d'huile neuve (96) et un raccord d'huile usagée (95), et au moins un tuyau de raccordement (80) avec une pièce de tête (81) qui est constituée pour le raccordement à un mécanisme de commande (6, 6'), en particulier une commande de pas ou une commande azimutale, d'une éolienne, **caractérisé en ce que** l'appareil de changement d'huile (9) est constitué pour le raccordement simultané à plusieurs mécanismes de commande et pour la réalisation du procédé selon l'une des revendications 1 à 11.

16. Ensemble selon la revendication 15, **caractérisé en ce que** le tuyau de raccordement (80) comprend un jeu de tuyaux, composé de plusieurs tuyaux individuels, les tuyaux étant respectivement raccordés, par la pièce de tête (81), à un dispositif de commande (6, 6') et, par l'autre extrémité de tuyau, à un raccordement de pompe (92).

17. Ensemble selon la revendication 15 ou 16, **caractérisé en ce que** le tuyau de raccordement (80) comprend une pièce de distribution (82) à laquelle sont raccordées au moins deux pièces de tête (81).
